(19) Europäisches Patentamt European Patent Office Office européen des brevets

(11) **EP 4 664 881 A1**

(12) **EUROPEAN PATENT APPLICATION**

(43) Date of publication:
**17.12.2025 Bulletin 2025/51**

(21) Application number: **24305943.3**

(22) Date of filing: **14.06.2024**

(51) International Patent Classification (IPC):
*H04N 19/13* (2014.01)   *G06N 3/045* (2023.01)
*G06T 9/00* (2006.01)   *H04N 19/91* (2014.01)

(52) Cooperative Patent Classification (CPC):
**H04N 19/13; G06N 3/044; G06N 3/045; G06N 3/08;
G06T 9/002; H04N 19/91**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
 • **DAMODARAN, Bharath Bhushan
  56000 VANNES (FR)**
 • **LAMBERT, Anne
  35250 SAINT-AUBIN-D'AUBIGNE (FR)**
 • **SCHNITZLER, Francois
  56890 SAINT AVE (FR)**
 • **LE MEUR, Olivier
  35160 TALENSAC (FR)**

(74) Representative: **Interdigital
Immeuble ZEN 2
845 A, avenue des Champs Blancs
35510 Cesson-Sévigné (FR)**

(54) **EFFICIENT COMPRESSION OF CODING TREE UNIT BASED IMPLICIT NEURAL REPRESENTATION WITH NEURAL NETWORK CODING STANDARD**

(57)    A method and an apparatus for encoding or decoding an image, a video or a 3D object are provided wherein data representative of the image, video or 3D object is partitioned into coding units. For each coding units, parameters of Implicit Neural Representation network are obtained, wherein each one of the coding units is represented using one of the Implicit Neural Representation networks. The obtained parameters are concatenated into into at least one tensor and encoded using context-adaptive binary arithmetic coding.

610 — Input signal

620 — Partition into coding units

630 — Learn INR parameters for coding units

640 — Concatenate INR parameters

650 — Encode INR parameters with CABAC

660 — bitstream

**FIG. 6**

EP 4 664 881 A1

**Description**

TECHNICAL FIELD

The present embodiments generally relate to image, video and/or 3D scene compression using Implicit Neural Representation (INR). The present embodiments relate to methods and apparatuses for improving entropy encoding or decoding of INR parameters.

BACKGROUND

To achieve high compression efficiency, image and video coding schemes usually employ prediction and transform to leverage spatial and temporal redundancy in the video content. Emerging technology makes use of neural networks. Among them, Implicit Neural Representation aims at parameterizing a function which takes coordinates as inputs and outputs values of a signal at these coordinates. INR can be used for instance for compressing image, videos or 3D objects or scene. It can also apply to any type of signal. Approaches are known to construct an INR network for encoding 2D or 3D images. Approaches are also known to compress a neural network. However, these approaches have a far lower computational complexity than end-to-end neural compression approaches.

SUMMARY

According to an aspect, a method for encoding an image or a video is provided. The method comprises partitioning data representative of an image or a 3D object into coding units, obtaining parameters of Implicit Neural Representation networks, wherein each one of the coding units is represented using one of the Implicit Neural Representation networks, concatenating the parameters of the Implicit Neural Representation networks into at least one tensor, and encoding the at least one tensor using context-adaptive binary arithmetic coding.

According to another aspect, an apparatus for encoding an image or a video is provided. The apparatus comprises one or more processors operable to partition data representative of an image or a 3D object into coding units, obtain parameters of Implicit Neural Representation networks, wherein each one of the coding units is represented using one of the Implicit Neural Representation networks, concatenate the parameters of the Implicit Neural Representation networks into at least one tensor, and encode the at least one tensor using context-adaptive binary arithmetic coding.

According to an aspect, a method for decoding an image or a video is provided. The method comprises decoding parameters of a set of Implicit Neural Representation networks concatenated into at least one tensor using context-adaptive binary arithmetic decoding, wherein each one of the Implicit Neural Representation networks represents one of a coding unit of an image or a 3D object partitioned into coding units, and reconstructing the image or the 3D object using the set of Implicit Neural Representation networks.

According to another aspect, an apparatus for decoding an image or a video is provided. The apparatus comprises one or more processors operable to decode parameters of a set of Implicit Neural Representation networks concatenated into at least one tensor using context-adaptive binary arithmetic decoding, wherein each one of the Implicit Neural Representation networks represents one of a coding unit of an image or a 3D object partitioned into coding units, and reconstruct the image or the 3D object using the set of Implicit Neural Representation networks.

Further embodiments that can be used alone or in combination are described herein.

One or more embodiments also provide a computer program comprising instructions which when executed by one or more processors cause the one or more processors to perform any one of the methods for encoding or decoding an image, a video or a 3D object according to any of the embodiments described herein. One or more of the present embodiments also provide a non-transitory computer readable medium and/or a computer readable storage medium having stored thereon instructions for encoding or decoding an image, a video or a 3D object according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

According to an aspect, a device is provided that comprises an apparatus for decoding an image, a video or a 3D object according to any one of the embodiments described above; and at least one of (i) an antenna configured to receive or transmit a signal, the signal including data representative of the image, video or 3D object, (ii) a band limiter configured to limit the signal to a band of frequencies that includes the data representative of the image, video or 3D object, or (iii) a display configured to display the image, video or 3D object.

In a variant, the device comprises at least one of a television, a cell phone, a tablet, a set-top box.

BRIEF DESCRIPTION OF THE DRAWINGS

FIG. 1A illustrates a block diagram of a system within which aspects of the present embodiments may be implemented according to an embodiment.

FIG. 1B illustrates a block diagram of a system within which aspects of the present embodiments may be implemented according to another embodiment.

FIG. 1C illustrates a block diagram of a system within which aspects of the present embodiments may be implemented according to another embodiment.

FIG. 2 illustrates an example an Implicit Neural Representative (INR) network.

FIG. 3 illustrates an example of a method for encoding a signal using an INR.

FIG. 4 illustrates an example of a method for reconstructing a signal using an INR.

FIG. 5A illustrates an example of partitionning of a 2D signal into coding units or coding tree units.

FIG. 5B illustrates an example of architecture of coding unit based INR.

FIG. 6 illustrates an example of a method for encoding a signal using an INR, according to an embodiment.

FIG. 7 illustrates an example of a method for reconstructing a signal using an INR, according to an embodiment.

FIG. 8 shows two remote devices communicating over a communication network in accordance with an example of the present principles.

FIG. 9 shows the syntax of a signal in accordance with an example of the present principles.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

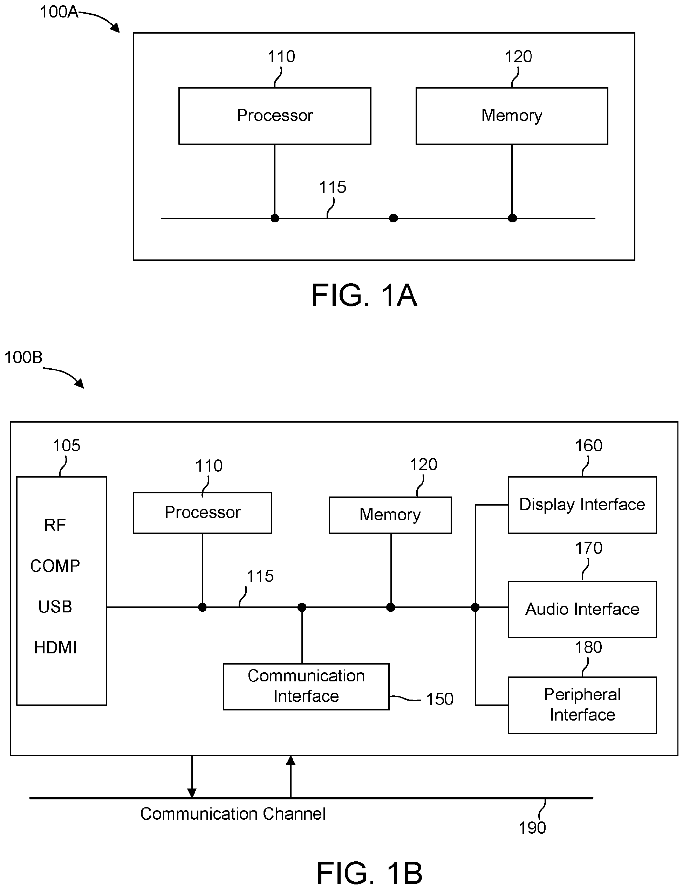

The aspects described and contemplated in this application can be implemented in many different forms. FIGs. 1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

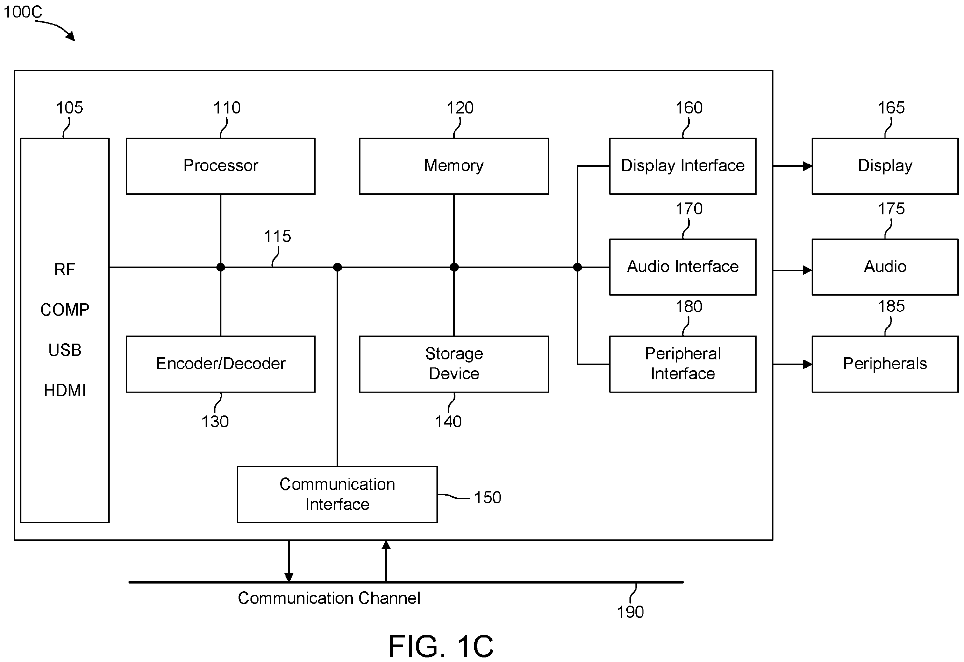

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

The various elements may be interconnected and transmit data therebetween using suitable connection arrangement 115, for example, an internal bus as known in the art, including the I2C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180. Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentionned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the I2C bus, wiring, and printed circuit boards.

Similarly as for the sytem 100B of FIG. 1B, the system 100C includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV.Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

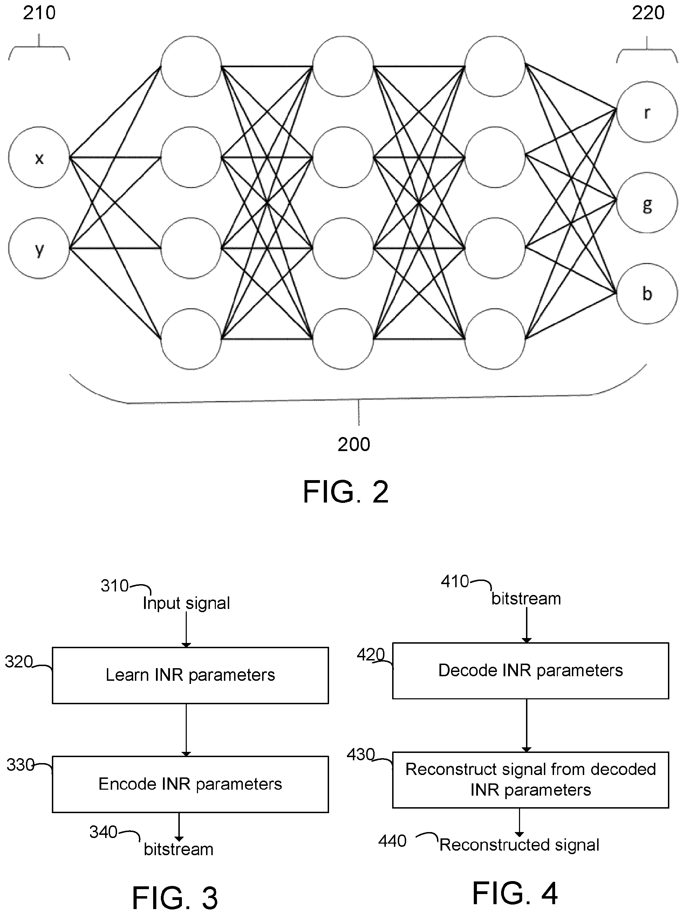

FIG. 2 illustrates an example of an implicit neural network (INR). For clarity, we use for illustration a 2D signal such as an image but an INR can be used for signals of any dimension. An INR is a function 200 which takes as input coordinates 210 and outputs values 220 of a signal at these coordinates. INR can be applied to image, videos or 3D objects among other applications.

In the image case, the inputs 210 are pixel coordinates (x,y) and the INR outputs 220 the color values (r,g,b) of the input pixel, for example in the RGB format. Other format can also be used and output, for example a YUV format. In the video case, the output is similar, but the input includes a frame index t in addition to pixel coordinates. An INR is used to reconstruct a signal by computing the signal values for every necessary coordinate inputs.

An INR 200 is typically a neural network, composed of multiple neural layers, such as fully connected layers. In the example illustrated on FIG. 2, the network has 4 layers. Intermediate outputs are represented by circles. Each neural layer can be described as a function that first multiply the input by a tensor, add a vector called the bias and then apply a nonlinear function on the resulting values. The shape (and other characteristics) of the tensor and the type of non-linear functions are called the architecture of the network. In the following, the values of the tensor are denoted by the term "weights", the weights and bias are denoted by the term "parameters". The weights, bias and, if applicable, the parameters of the non-linear functions, are called the parameters $\theta$ of the network. The architecture and the parameters define a "model". We will use $f_\theta$ to denote an INR function parameterized by $\theta$.

FIG. 3 shows an example of a process to encode an input signal 310 using an INR. This is done by optimizing/learning (320) the parameters θ to reconstruct the signal and optionally encoding them (330) to create an output bitstream 340. For an image I, the parameters θ can for example be optimized by minimizing the following loss function:

$$Loss = D(I, f_{\boldsymbol{\theta}}) + \lambda\, R(\theta)$$

$$D_{MSE} = \frac{1}{C} \sum_{x,y} (I(x,y) - f_{\boldsymbol{\theta}}(x,y))^2 \quad ,$$

where D is a distortion which quantifies the difference between the predicted (reconstructed) image by $f_\theta$ to the original image I, R is the bitrate of the encoded parameters and λ a trade-off parameter between D and R. D could be any differentiable distortion measure, such as mean squared error as in the second equation $D_{MSE}$. C is the total number of pixels in the image I. Other metrics such as LPIPS (learned perceptual image patch similarity) can also be used in this case. The optimization of the parameters θ is typically performed by a machine learning approach such as a batch gradient descent method.

FIG. 4 illustrates an example of a method for reconstructing a signal encoded using an INR. For example, if parameters of the INR have been encoded in a bitstream (410), the INR parameters are decoded (420) and the signal (440) is reconstructed (430) using the INR defined by the decoded INR parameters. To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs (x,y) for all $x \in \{0,1,...,255\}$ and $y \in \{0,1,...,255\}$. Other choices are possible, for example to upsample, downsample or extend the original image.

Using one INR network globally for the whole signal makes learning difficult, as all parameters contribute to all values and lead to a large network as it must encode all details of the signal. To overcome this, a solution was proposed based on a coding tree unit based implicit neural representation. More specifically, in this solution, the input domain is considered as a coding tree unit (CTU) and partitionned into coding units (CU). A set of different values for the INR parameters is learned for each coding unit.

Existing approaches to encode INR parameters in a bitstream, such as Neural Network Coding Standard are optimal when there is one global INR network that represent the input signal.

However, such approaches are sub-optimal when several small INR networks are to be encoded.

Parameters θ of an INR can be encoded optimally in a bitstream using any entropic coder or by using the neural network compression standard developed in Neural Network Coding (NNC)/ ISO/IEC 15938-17 or MPEG-7 part 17 and described in NNCodec: An Open Source Software Implementation of the Neural Network Coding ISO/IEC Standard, D. Becking, P. Haase, K. Muller, H. Kirchhoffer, W. Samek, D. Marpe published in ICML 2023 Workshop Neural Compression, 11 July 2023. If one INR network is used to compress the whole signal, then the straightforward application of NNC standard will be able to optimally encode the parameters θ in the bit-stream. However, the coding tree unit (CTU)-based INR or any kind of partition-based INR contains several small INR networks such that each partition is approximated (compressed) by one small INR network. In this case, it appears that using NNC standard for compressing the parameters of the CTU based INR is not optimal.

By small INR network, it is understood here an INR network having a reduced number of layers and outpit size compared to an INR network for processing the whole signal without partitioning.

The NNC standard uses CABAC to encode the quantized weights/parameters of an INR model into a bit-stream. It is known that CABAC or deepCABAC performs at optimal when there is a sequential redundancy in symbols to be encoded. When the weights/parameters of the neural network are in higher order tensor (above 2D tensor, e.g: 3D, 4D tensor, etc), the NNC standard performs a conversion into a 2D tensor. Also, when there are several neural networks, the NNC standard performs conversion of the several neural networks into a 2D tensor, and this conversion is sub-optimal for the CABAC.

The embodiments described herein provide a solution to overcome this problem.

In an embodiment, when using CTU-based INR networks, the parameters of the INR networks are concatenated and provided into the NNC standard for encoding. This embodiment provides for concatenating of all the available neural network parameters into a tensor: one tensor representing the weights of all neural networks; one tensor representing the bias of all the neural networks, and so on. This approach allows to significantly reduce the bitrate.

In a further embodiment, the prior knowledge of the CABAC (Context Adaptive Binary Arithmetic coding, described for example in Context-based Adaptive Binary Arithmetic Coding in the H.264/AVC Video Compression Standard, IEEE Transactions on Circuits and Systems for Video Technoloy, vol 13, n°7, July 2003) is used in the concatenation of the several INR networks to take the correlation between the neighboring CTU's into account. It is known that CABAC or deepCABAC performs optimally when there is a sequential redundancy in the symbols to be encoded, so in this embodiment, an ordering mechanism of the CTU based INR weights is used to create a sequential redundancy in the INR weights so that CABAC encoding or deepCABAC of the NNC standard could explore this engineered redundancy to reduce the bitrate of the bitstream.

According to experimental analysis, the proposed embodiments provide about 50-80% reduction in bitrate compared to straight forward use of the NNC standard. Using the first embodiment mentionned above (that is just concatenating the weights in the tensor 3D tensor for the weights and 2D tensor for bias) offered substantial savings in the bitrate about 60-80% compared to feeding the NNC without concatenating. This validates the hypothesis that NNC Standard is not optimal to compress several small neural networks. Further, adding prior knowledge (creating sequential redundancy) in concatenating the weights/parameters with respect to CABAC, additional bit-rate savings about 5.8-20% can be obtained.

In a embodiment, a method for encoding data representing an image, or a video or a 3D object is provided wherein several small neural networks are concatenated. In a further embodiment, a sequential redundancy is created when concatenating the several small neural networks.

Concatenating of several small neural networks

To better handle local contents in a signal in INR-based compression, it is advantageous to learn an INR network for parts of the signal. To limit the redundancy in the encoding caused by these many INRs, it is proposed to optimize the division of the signal using coding units.

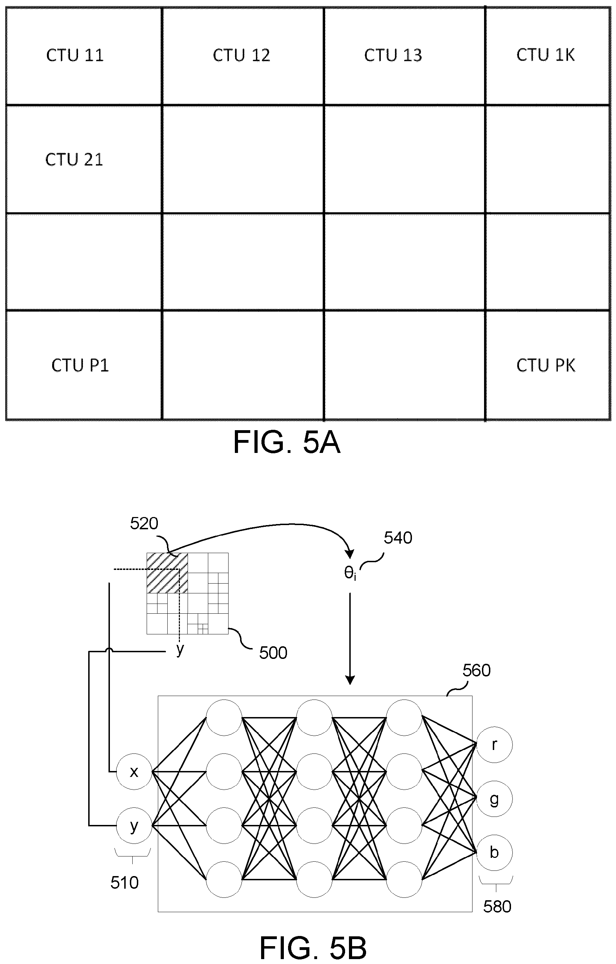

In the embodiments described herein, the signal is partitioned into a set of coding units. FIG. 5A shows an example of partitionning a 2D signal, for example a picture, into coding units or coding tree units CTU 11, CTU 12, .... CTU PK. The picture is partitioned and processed in units of, for example, CUs (Coding units) or blocks. In the disclosure, different expressions may be used to refer to such a unit or block resulting from a partitioning of the signal. Such wording may be coding unit or CU, coding block or CB, or block. A CTU (Coding Tree Unit) refers to a group of blocks or group of units or group of coding units (CUs). In some embodiments, a CTU may be considered as a block, or a unit as itself.

A resulting architecture is illustrated in FIG. 5B for an image, according to an embodiment. The domain (500) of the signal is partitioned into coding units (CU) using quadtree recursive partitioning. Other recursive partitioning could be used, such as binary, ternary trees or geometric partitioning. More generally, any partitioning methods that generate blocks at variable block sizes can be used. For each coding unit, a specific set of INR parameters $\theta_i$ (540) is trained to encode the signal values within this coding unit. The signal is reconstructed as follows. Inputs coordinates (510) are first used to identify the coding unit (520) that contains the points defined by these coordinates. The associated parameters $\theta_i$ (540) are used to parameterize an INR network (560). Finally, the input coordinates (510) are used as input of this network to compute the reconstructed signal value (580) at these coordinates.

On the encoding side, one INR is learned for each coding unit. Parameters of each INR network and parameters indicating the signal partition are encoded to construct a bitstream for transmission or for later use.

Many approaches are possible to partition the signal into coding tree units. A brute force approach is possible, where all possible partitions are considered. Another possible approach is a greedy search where an initial CU covering the whole signal is incrementally divided by evaluating the impact of a CU split and splitting is done if the impact in terms of rate/distortion is positive. In other words, a CU is split further if its encoding (together with its INR) is less advantageous in terms of rate distortion than encoding its children. It is also possible to build the CU partition without learning INR networks. As an example, both a brute force or a greedy search approach could optimize other characteristics of the CUs, such as pixel mean, variance, texture and/or any other statistics of the signal within the considered CUs.

Learning INR for a CU is identical to learning a network for a signal. In other words, the CU itself is considered as a signal. Note that some approaches for partitioning the signal may require the computation and the evaluation of one INR per possible coding unit.

In the example of FIG. 5A, there are $P * K = N$ number of INR networks for the 2D signal (N number of coding units, K columns of coding units and P row of coding units). Let $f_\theta^{11}, f_\theta^{12}, ..., f_\theta^{P.K}$ be the INR networks learned for the corresponding CU units $CTU_{11}, CTU_{12}, ..., CTU_{PK}$ . $f_\theta^{11}$ consists of parameters which should be transmitted to the decoding side, its weights are represented as $w_{11}^l \in R^{S \times T}$ , wherein S is the number of input nodes at layer l and T is the number of output nodes at layer l, and bias are represented as $b_{11}^l \in R^T$ . According to an embodiment, the concatenation of the parameters of the several INR into a single model is performed as follows:

- The weight vectors at the layer $l$ of all the CU's are concatenated into a single 3D tensor as $W^l \in R^{N \times S \times T}$, $l = 1 ... L$

- The bias vector at the layer *l* of all the CU's are concatenated into a single 2D tensor as $B^l \in R^{N \times T}$, $l = 1 \ldots L$

The L 3D tensors and 2D tensors are then provided to an entropy coding module, eventually with quantization module, such as the NNC standard.

If there are any other parameters in the INR network, those parameters are also concatenated as above and provided to the entropy coding module.

The INR representation could also contain other parameters specific to each CU, like sparse coefficients, or parameters of warping layers. In this case these parameters are also concatenated in a single tensor.

After the concatenation of all the parameters into a single model (consisting in several tensors), The model is provided to the NNC standard for encoding.

In a variant, each of the tensors can be represented in a *state_dict* in the NNC standard. In Pytorch, the neural network parameters are represented in the *state_dict,* which is a python dictionary object that maps each layer to its parameter tensor.

The NNC standard can take as input either the tensors represented in the *state_dict* or the INR model. In this case, the INR model comprises for each layer l, the 3D tensor of concatenated weights and the 2D tensor of concatenated bias.

The NNC standard quantizes the tensors of the model with a corresponding QP (quality parameter) value and entropy encodes the quantized values into a bitstream.

In a variant, the manner the concatenation is performed is signaled in the bitstream, so that the decoder can convert the concatenated weights and bias to the original ones for reconstruction (decoding).

In the above, description is framed with respect to a uniform partitioning of the signal into coding units, but it can be generalized to any kind of variable size partition (coding tree unit or super-pixels, etc) because the INR is agnostic to the partition type and size. The coding units can have any size and the partitioning can be non-uniform. What is needed is that the coding units are parsed in a same manner at the encoder and the decoder.

In a variant, the structure of the INRs (number of layers, number of hidden dimensions) for each CTU is coded at a higher level in the bitstream, so that the decoder is informed of the partitioning of the input signal into coding units.

In the embodiment described herein, it has been assumed that the INR networks learned for the CUs have a same structure (same number of layers, same number of dimensions).

In another embodiment, the INR networks specific to each partition or CU can be different. That is, the INR networks can have different number of layers, or different number of hidden nodes (dimensions). In a variant, the structure of the INRs is encoded in the bitstream at a higher level, including the number of weights at each layer, so the number of weights for each layer is known to the entropy coding module. In this variant, the concatenation of the weights at each layer can be done in a similar manner as when the INRs have a same structure.

In a variant of this embodiment, when the number of weights at leach layer is not encoded in the bitstream, the shape of the 3D tensor for the weight values are determined by the maximum size of the dimensions among all the small INR networks. The concatenation is performed similarly as above into a single 3D tensor as $W^l$, and when the hidden dimensions are smaller than the maximum dimensions, zeros are inserted until the maximum dimension for the layer, and any flag is added for the last INR network to indicate to the entropic coder to terminate entropic coding.

In another variant, the weight values of the CUs are directly concatenated in a 1D tensor and a flag is signaled after each weight to indicate whether or not this is the last weight of the specific CU. In this way, the end of the weight values for each CU is known by the entropy encoder.

In a similar manner, the bias values and other parameters are also concatenated.

Concatenating of small neural networks with sequential redundancy

In the embodiments described above, the concatenation of several INR networks is performed per layer. That is all weights of a layer for an INR of a CU are concatenated, then the weights of the layer for the next CU and so on. However this concatenation does not take into account any knowledge of the underlying entropy model (CABAC).

A variant of this embodiment is provided wherein the weights values are re-ordered in the concatenation such that sequential redundancy is created.

In order to understand how to create this sequential redundancy, the binarization process in the NNC standard is first described below. Then the proposed re-ordering of the values to further reduce the bitrate is described.

Binarization in the NNC standard

NNC Standardization uses DeepCABAC in the binarization process and entropic coding. Given the quantized weights of the neural network, DeepCABAC scans the elements in the row-major order and binarizes them as follows: *Sig flag, sign flag, Abs Greater flags and Exp.*

*Golomb encoding.*

The first bit *Sig flag* is the significant bit which determines whether the weight value is significant or not, if the weight value is not zero then it is significant. The second bit *sign flag* indicates the sign of the weight value, if it is positive it is 0 and 1 for negative value. The third bit *Abs Greater flag* indicates whether the absolute weight value is greater than 1, then it is 1 or else 0. The fourth bit is another *Abs Greater flag* which indicates whether the absolute weight value is greater than 2, then it is 1 or else 0. The fifth (or corresponding n-th) bit is another *Abs Greater flag* which indicates whether the absolute weight value is greater than 'n'. then it is 1 or else 0. Here 'n' is an hyperparameter of the entropy coder. Lastly, the remainder is binarized using Exponential Golomb code.

In DeepCABAC used in the NCC standard, every bits in the binarization is encoded in the bitstream with its own context model, except the few bits in the Exponential Golomb code.

Ordering of INR weights/parameters

In CTU based INR method, each CTU is approximated with a small INR network, thus CTU-INR contains several small INR networks. From prior information of the natural signal, it is known that neighboring values will be correlated or redundant. From the CTU perspective, the neighboring blocks of the CTU might also be correlated or redundant, thus the weights of the CTU-INR might also be correlated/redundant. If this redundancy is explored in the encoding, we could expect a reduction in the bitlength of the bitstream.

From the DeepCABAC binarization perspective, even though there is no strong correlation or redundancy between the neighboring blocks of the CTU, there could be a strong redundancy in the few bits of the binarization. For instance, the first value of the CTU block 1 and block 2 could have the same significant bit, sign bits, etc. Since DeepCABAC or CABAC has a separate context model for each of these bits, it will explore the redundancy in the individual bits very well.

At $l^{th}$ layer, let $w_i^{b_j}$ , $i = 1,2, ... M, j = 1, 2, ... N$ be the $i^{th}$ weight value of the INR of block $j$, $M$ being the number of weight values at layer $l$ and N being the number of CTU blocks. To create the redundancy in the binary bits, the weights of the entire CTU blocks at layer $l$ are re-ordered as follows:

$$\begin{bmatrix} w_1^{CTU_1} & w_1^{CTU_2} & w_1^{CTU_3} & w_1^{CTU_4} \cdots & w_1^{CTU_N} \\ w_2^{CTU_1} & & & & \\ w_3^{CTU_1} & & \ddots & & \vdots \\ \vdots & & & & \\ w_M^{CTU_1} & w_M^{CTU_2} & w_M^{CTU_3} & w_M^{CTU_4} \cdots & w_M^{CTU_N} \end{bmatrix}$$

Each column corresponds to a CTU block, and each row represents a weight value of the CTU-INR. The i-th row comprises the i-th weight value of all CTU blocks.

This ordering is preferred since the DeepCABAC/CABAC scans the values in the array in the row-major order. Thus, the ordering of the weight values will be as:

[ first row, second row, third row, ...... , last row].

The first neuron of the CTU-INR in $CTU_1$ could be similar to the first neuron of the CTU-INR in $CTU_2$, and so on. This similarity horizon will depend on the nature of the underlying signal and the scanning method (e.g row-major order, zig-zag order, etc). If the similarity is very strong then the proposed ordering will create strong redundancy in the binarization bits, thus CABAC compress's the bits very well and results in the low bitrate.

This re-ordering process is repeated for all the remaining layers in the CTU-INR. A similar re-ordering is also performed for the bias vectors of the INR networks.

In some variants, the re-ordering procedure is signaled in the bitstream in order to decode the signal when several re-orderings or no-reordering are possible.

If the CTU-INR representation consists of other parameters like sparse coefficients in dictionary-based representation, warping parameters in the warping layers, those parameters are also concatenated before feeding to NNC standard.

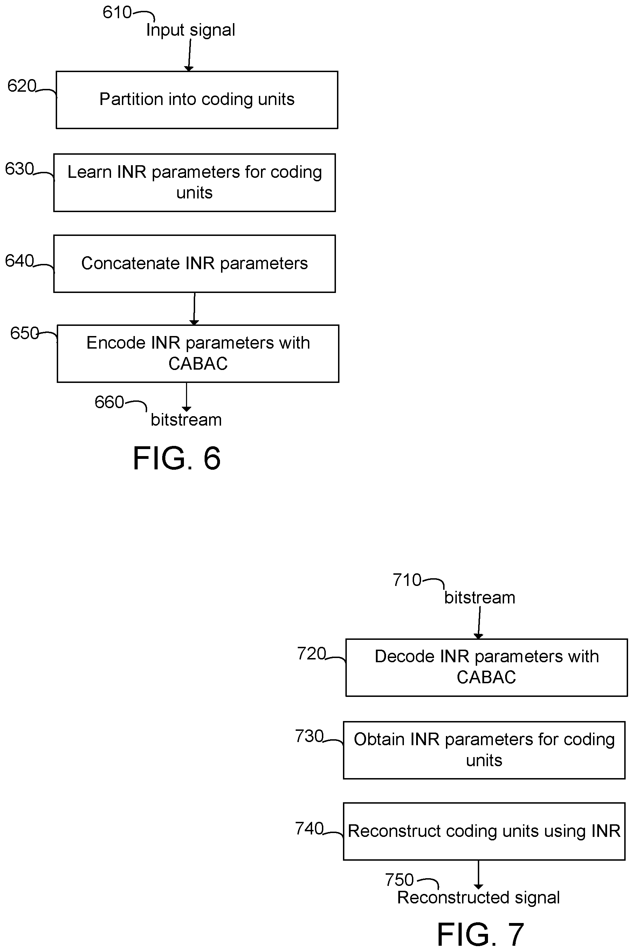

FIG. 6 illustrates an example of a method for encoding an input signal 610 using several INRs, according to one of the embodiments described above. At 620, data representative of the signal is partitionned into coding units. For example, the signal can be a 2D signal, e.g. a picture, a video or 3D object. For example, the CTU blocks can be partitioned with maximum size of the patch as 64, which results in 1024 CTU units for a 1920x1080 HD format picture. Other examples of maximum size partitioning can also be used, such as 16, 32 or 128, or any other size appropriate with respect to the picture format. At 630, each one of the coding units is represented using one INR. For each coding unit, parameters of the INR are learned. For example, the INR functions can be trained with Fourier mapping and followed by multilayer perceptron (MLP) with Sine activation function. At 640, a model of one INR is obtained by concatenating the parameters of the learned INRs into one or more tensors according to one of the embodiments described above. At 650, the model obtained at 640 is encoded to produce a bitstream 660. The obtained one or more tensors are quantized and entropy coded using a context-adaptive binary arithmetic coding, such as CABAC or DeepCabac. For example, the NNC standard can be used for encoding the model obtained at 640.

FIG. 7 illustrates an example of a method for reconstructing a signal 750 using a plurality of INRs from an input bitstream 710, according to one of the embodiments described above. For example, the signal can be a 2D signal, e.g. a picture, a video or 3D object. At 720, parameters of a model are entropy decoded using a context-adaptive binary arithmetic decoding. A same method as the one used at the encoder is used. For example, the NNC standard is used for decoding the model. The decoded model comprises one or more tensors concatenating parameters of the plurality of INRs. Each one of the INRs of the plurality represents a coding unit from a partitionning of the original signal partitionned into coding units. At 730, the one or more tensors decoded at 720 are parsed to identify the parameters of each INR. At 740, the signal is reconstructed. As illustrated on FIG. 5B, for each coordinate of the signal to reconstruct (for example a pixel (x,y) for an image), the INR corresponding to the coding unit to which the coordinate belongs is identified and applied to the coordinate to obtained the reconstructed signal at output (for example the r,g,b values in the case of the image).

Experimental results

In order to validate the proposed concatenation and re-ordering embodiments, experiments have been conduced with the BasketBall JVET video sequence in HD format (1920x 1080). The CTU blocks are partitioned with maximum size of the patch as 64, and this results in 1024 CTU units. For each CTU unit, the INR function were trained with Fourier mapping and followed by multilayer perceptron (MLP) with Sine activation function. The following table 1 shows the results of the compression with NNC (baseline), NNC + the concatenation embodiment, and NNC+ the concatenation and re-ordering embodiment for different QP values. It can be seen that the proposed embodiments reduce the bitrate significantly. The quantification of the bitrate gains by applying the embodiments on the standard NNC is displayed in Table 2.

Since the NNC baseline (without concatenation) takes a significant amount of time to perform compression for 200 frames, encoding is performed only for one QP (qp=-56) value to assess the efficiency of the embodiments.

Table 1 : NNC Compression of the CTU-INR weights with the proposed concatenation and re-ordering embodiments for different QP values.

| QP | NNC | Concatenation + NNC (BPP) | Concatenation + re-ordering + NNC (Bpp) |
|---|---|---|---|
| -66 | - | 0.496 | 0.4583 |
| -56 | 2.033 | 0.409 | 0.375 |
| -46 | - | 0.3087 | 0.2702 |
| -36 | - | 0.2182 | 0.1794 |
| - 26 | - | 0.1244 | 0.0893 |

Table 2: Bitrate gain of the proposed embodiments compared to the NNC Standard

| QP | Gain in bpp (Column #1 vs Column #2 in Table 1) (%) | Gain in bpp (Column #2 vs Column #3 in Table 1) (%) |
|---|---|---|
| -66 | - | 7.6% |
| -56 | 79.8% | 8.3% |
| -46 | - | 12.43% |
| -36 | - | 17.78% |
| -26 | | 28.21% |

The concatenation approach according to the embodiment described herein allows to reduce the bitrate for encoding a signal using CTU-based INR significantly: about 79% compared to the approach where NNC standard is used directly encoding the several small INR networks. It is important to note that the proposed approach does not impact the reconstruction quality, it results in a same reconstruction quality. Apart from reducing the bitrate, the proposed approach also reduces the encoding time of the NNC significantly. For example, with the concatenation approach, NNC performs encoding into bitstream in 3 seconds, whereas the straightforward application of NNC without concatenation needs 38 seconds.

Further, when the concatenation approach is combined with re-ordering approach, the bitrate is further reduced significantly, with more gains for higher QP.

In the embodiment described above, a row-major re-ordering of the weights is described. The embodiments can apply to any other kind of re-ordering that could be used which could potentially create more redundancy in the re-ordered weights. This variant re-ordering could be zig-zag ordering for example. In case, several re-ordering are possible, the type of re-ordering can be signaled to the decoder.

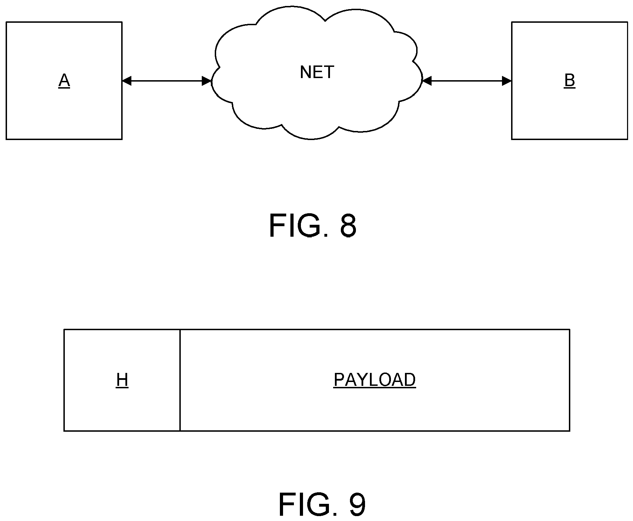

In an embodiment, illustrated in FIG. 8, in a transmission context between two remote devices A and B over a communication network NET, the device A comprises a processor in relation with memory RAM and ROM which are configured to implement a method for encoding a signal according to any one of the embodiments described herein and the device B comprises a processor in relation with memory RAM and ROM which are configured to implement a method for decoding a signal according to any one of the embodiments described herein. In accordance with an example, the network is a broadcast network, adapted to broadcast/transmit a coded video from device A to decoding devices including the device B.

FIG. 9 shows an example of the syntax of a signal transmitted over a packet-based transmission protocol. Each transmitted packet P comprises a header H and a payload PAYLOAD. In some embodiments, the payload PAYLOAD may comprise data representative of parameters of the plurality of INRs representing an image, or a video or a 3D object, according to any one of the embodiments described above. The payload can also comprise any signaling as described above. For example, the signal comprises syntax elements for indicating the partitioning of the image, video or 3D object into coding units, including any syntax element useful for the decoder to parse the coding units resulting from this partitioning. When the INRs from the plurality of INRs have different structures, the signal can include any syntax elements indicating the structure of the INRs such that the entropy encoder and decoder has knowledge of the structure (number of layers, hidden dimensions) for the concatenation of the parameters at encoder or the parsing of the concatenated tensors at the decoder.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:

a. SDP (session description protocol), a format for describing multimedia communication sessions for the purposes of session announcement and session invitation, for example as described in RFCs and used in conjunction with RTP (Real-time Transport Protocol) transmission.

b. DASH MPD (Media Presentation Description) Descriptors, for example as used in DASH and transmitted over HTTP, a Descriptor is associated to a Representation or collection of Representations to provide additional characteristic to the content Representation.

c. RTP header extensions, for example as used during RTP streaming.

d. ISO Base Media File Format, for example as used in OMAF and using boxes which are object-oriented building blocks defined by a unique type identifier and length also known as 'atoms' in some specifications.

e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described above. Features of these embodiments can be provided alone or in any combination, across various claim categories and types.

## Claims

1.   A method, comprising:

partitioning data representative of an image or a 3D object into coding units,
obtaining parameters of Implicit Neural Representation networks, wherein each one of the coding units is represented using one of the Implicit Neural Representation networks,
concatenating the parameters of the Implicit Neural Representation networks into at least one tensor,
encoding the at least one tensor using context-adaptive binary arithmetic coding.

2.   An apparatus comprising one or more processors operable to:

partition data representative of an image or a 3D object into coding units; and
obtain parameters of Implicit Neural Representation networks, wherein each one of the coding units is represented using one of the Implicit Neural Representation networks,
concatenate the parameters of the Implicit Neural Representation networks into at least one tensor,
encode the at least one tensor using context-adaptive binary arithmetic coding.

3.   A method comprising:

decoding parameters of a set of Implicit Neural Representation networks concatenated into at least one tensor using context-adaptive binary arithmetic decoding, wherein each one of the Implicit Neural Representation networks represents one of a coding unit of an image or a 3D object partitioned into coding units.
reconstructing the image or the 3D object using the set of Implicit Neural Representation networks.

4.   An apparatus comprising one or more processors operable to:

decode parameters of a set of Implicit Neural Representation networks concatenated into at least one tensor using context-adaptive binary arithmetic decoding, wherein

each one of the Implicit Neural Representation networks represents one of a coding unit of an image or a 3D object partitioned into coding units.
reconstruct the image or the 3D object using the set of Implicit Neural Representation networks.

5. The method of claims 1 or 3 or the apparatus of claims 2 or 4, wherein the at least one tensor comprises one tensor for each kind of parameters of the Implicit Neural Representation networks that concatenates values for the same kind of parameters.

6. The method of claims 1 or 3, or the apparatus of claims 2 or 4, wherein the parameters comprise at least weights and bias and wherein the at least one tensor comprises a first tensor that concatenates the weights and a second tensor that concatenates the bias.

7. The method of any one of claims 1, 3 or 5-6 or the apparatus of any one of claims 2, or 4-6, wherein the parameters are concatenated into the at least one tensor per layer of the Implicit Neural Representation networks.

8. The method or the apparatus of claim 7, wherein the parameters are concatenated into the at least one tensor with an ordering that sequentially concatenates per coding unit each one of the parameters of a layer of the Implicit Neural Representation networks.

9. The method or the apparatus of claim 7 or 8, wherein the parameters are concatenated into the at least one tensor according to a scanning order using by the context-adaptive binary arithmetic coding.

10. The method or the apparatus of claim 7 or 8, an indicator is signaled to indicate an order for concatenating the parameters.

11. A computer program product including instructions for causing one or more processors to carry out the method of any of claims 1, 3 or 5-10.

12. A non-transitory computer readable medium storing executable program instructions to cause a computer executing the program instructions to perform the method of any of claims 1, 3 or 5-10.

13. A device comprising:

an apparatus according to claim 4; and
at least one of (i) an antenna configured to receive or transmit a signal, the signal including data representative of the image or 3D object, (ii) a band limiter configured to limit the signal to a band of frequencies that includes the data representative of the image or 3D object, or (iii) a display configured to display the image or 3D object.

14. A device according to claim 13, wherein the device comprises at least one of a television, a cell phone, a tablet, a set-top box.

100A

110          120

Processor          Memory

115

FIG. 1A

100B

105          110          120          160

RF          Processor          Memory          Display Interface

COMP          170

USB          Audio Interface

HDMI          115          180

Communication
Interface          Peripheral
Interface

150

Communication Channel

190

FIG. 1B

FIG. 1C

210                                                                         220

200

FIG. 2

310 ⌐ Input signal

320 ⌐ | Learn INR parameters |

330 ⌐ | Encode INR parameters |

340 ⌐ bitstream

FIG. 3

410 ⌐ bitstream

420 ⌐ | Decode INR parameters |

430 ⌐ | Reconstruct signal from decoded INR parameters |

440 ⌐ Reconstructed signal

FIG. 4

| CTU 11 | CTU 12 | CTU 13 | CTU 1K |
|--------|--------|--------|--------|
| CTU 21 |        |        |        |
|        |        |        |        |
| CTU P1 |        |        | CTU PK |

## FIG. 5A

## FIG. 5B

610 — Input signal

620 — Partition into coding units

630 — Learn INR parameters for coding units

640 — Concatenate INR parameters

650 — Encode INR parameters with CABAC

660 — bitstream

## FIG. 6

710 — bitstream

720 — Decode INR parameters with CABAC

730 — Obtain INR parameters for coding units

740 — Reconstruct coding units using INR

750 — Reconstructed signal

## FIG. 7

A ←→ NET ←→ B

FIG. 8

| H | PAYLOAD |
|---|---------|

FIG. 9

Europäisches
Patentamt
European
Patent Office
Office européen
des brevets

# EUROPEAN SEARCH REPORT

**Application Number**

EP 24 30 5943

## DOCUMENTS CONSIDERED TO BE RELEVANT

| Category | Citation of document with indication, where appropriate, of relevant passages | Relevant to claim |
|---|---|---|
| X | WO 2024/078892 A1 (INTERDIGITAL CE PATENT HOLDINGS SAS [FR]) 18 April 2024 (2024-04-18) * page 6 - page 13; claim 1; figure 15 * ----- | 1-14 |
| A | GOMES CARLOS ET AL: "Video Compression with Entropy-Constrained Neural Representations", 2023 IEEE/CVF CONFERENCE ON COMPUTER VISION AND PATTERN RECOGNITION (CVPR), IEEE, 17 June 2023 (2023-06-17), pages 18497-18506, XP034400935, DOI: 10.1109/CVPR52729.2023.01774 [retrieved on 2023-08-22] * the whole document * ----- | 1-14 |

**CLASSIFICATION OF THE APPLICATION (IPC)**

INV.
H04N19/13
G06N3/045
G06T9/00
H04N19/91

**TECHNICAL FIELDS SEARCHED (IPC)**

H04N
G06N
G06T

The present search report has been drawn up for all claims

| Place of search | Date of completion of the search | Examiner |
|---|---|---|
| Munich | 24 October 2024 | Cordara, Giovanni |

EPO FORM 1503 03.82 (P04C01)

## ANNEX TO THE EUROPEAN SEARCH REPORT
## ON EUROPEAN PATENT APPLICATION NO.

EP 24 30 5943

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | Publication date | Patent family member(s) | Publication date |
|---|---|---|---|
| WO 2024078892 A1 | 18-04-2024 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. BECKING** ; **P. HAASE,** ; **K. MULLER** ; **H. KIRCHHOFFER** ; **W. SAMEK** ; **D. MARPE**. NNCodec: An Open Source Software Implementation of the Neural Network Coding ISO/IEC Standard,. *ICML 2023 Workshop Neural Compression*, 11 July 2023

- Context-based Adaptive Binary Arithmetic Coding in the H.264/AVC Video Compression Standard,. *IEEE Transactions on Circuits and Systems for Video Technoloy*, July 2003, vol. 13 (7)